# EUROPEAN PATENT APPLICATION

(11) **EP 4 485 582 A1**
(43) Date of publication of application: **01.01.2025**
(21) Application number: 24185077.5
(22) Date of filing: 27.06.2024
(51) Int. Cl.: H01M 4/66, H01M 4/70, H01M 10/052, H01M 50/533, H01M 50/538

(54) **ELECTRODE SHEET, BATTERY CELL, AND BATTERY**

(30) Priority: 27.06.2023 CN 202321661536 U; 20.03.2024 WO PCT/CN2024/082678
(71) Applicant: Eve Power Co., Ltd., Jingmen, Hubei 448000 (CN)
(72) Inventor: CHEN, Wei, Jingmen, Hubei, 448000 (CN); SU, Bin, Jingmen, Hubei, 448000 (CN); LI, Weibo, Jingmen, Hubei, 44800 (CN); CHEN, Liquan, Jingmen, Hubei, 448000 (CN)
(74) Representative: Murgitroyd & Company

(57) **Abstract**

An electrode sheet, a battery cell, and a battery are provided. The electrode sheet (1) includes an electrode sheet body (10). The electrode sheet body (10) includes a first side edge (11) and a second side edge (12) connected together. A connection position between the first side edge (11) and the second side edge (12) is provided with a first chamfer (101). The first chamfer (101) includes a first arc segment (10A) and at least one first transition segment (10B). The first arc segment (10A) is connected to the first side edge (11) and/or the second side edge (12) through the at least one first transition segment (10B). The first arc segment (10A) protrudes toward a direction away from a center of the electrode sheet body (10).

## Description

### TECHNICAL FIELD

The present application relates to the field of power battery technologies, and, more particularly, to an electrode sheet, a battery cell, and a battery.

### BACKGROUND

Lithium batteries refer to batteries containing lithium, including metal lithium, lithium alloys, lithium ions, and lithium polymers, in an electrochemical system. Since the lithium batteries have advantages of high energy density, good cycle performance, and long service life, the lithium batteries are widely used in products such as electric devices, electrical appliances, and smart machines. According to structures, the lithium batteries can be divided into cylindrical lithium batteries, soft-pack polymer lithium batteries, and square lithium batteries. Electrode sheets of battery cells of the cylindrical lithium batteries are assembled by a winding method. Battery cells of the soft-pack polymer lithium batteries and the square lithium batteries are assembled by the winding method or a sheet-stacking method.

Compared with the winding method, since lithium batteries formed by the sheet-stacking method can have better performance of energy rating and liquid absorption processing, the sheet-stacking method has become a mainstream method for assembling the battery cells of the soft-pack polymer lithium batteries and the square lithium batteries. Currently, before the battery cells of the lithium batteries are assembled by the sheet-stacking method, edge corners of the electrode sheets are generally made into V-shaped angles to prevent the electrode sheets from moving, which may cause the electrode sheets to pierce separators, when impacted by external forces. Although the method mentioned above reduces a risk of the electrode sheets piercing the separators to a certain extent, right angles of the electrode sheets have not been completely eliminated, but only been reduced or shifted in position. Therefore, the risk of the electrode sheets piercing the separators in related art still exists.

### SUMMARY

An electrode sheet, a battery cell, and a battery are provided to solve a problem that batteries may shake when impacted by external forces, causing electrode sheets to pierce separators.

In a first aspect, an electrode sheet is provided by the embodiments of the present application. The electrode sheet includes an electrode sheet body. The electrode sheet body includes a first side edge and a second side edge connected together. A connection position between the first side edge and the second side edge is provided with a first chamfer. The first chamfer includes a first arc segment and at least one first transition segment. The first arc segment is connected to the first side edge and/or the second side edge through the at least one first transition segment. The first arc segment protrudes toward a direction away from a center of the electrode sheet body.

In a second aspect, a battery cell is provided by the embodiments of the present application. The battery includes a positive electrode sheet, a negative electrode sheet, and a separator between the positive electrode sheet and the negative electrode sheet. The positive electrode sheet includes the electrode sheet mentioned above. The negative electrode sheet includes the electrode sheet mentioned above.

In a third aspect, a battery is provided by the embodiments of the present application. The battery includes a housing and the battery cell mentioned above. The housing is provided with an accommodating cavity. The battery cell is located within the accommodating cavity.

The beneficial effects of the present application are illustrated below. An electrode sheet, a battery cell, and a battery are provided by the embodiments of the present application. The electrode sheet includes an electrode sheet body. The electrode sheet body includes a first side edge and a second side edge connected together, and a connection position between the first side edge and the second side edge is provided with a first chamfer. The first chamfer includes a first arc segment and at least one first transition segment. The first arc segment is connected to the first side edge and/or the second side edge through the at least one first transition segment. The first arc segment protrudes toward a direction away from a center of the electrode sheet body. This avoids a situation in related art that edge corners of electrode sheets are acute angles, obtuse angles, or right angles, and thus effectively prevents the battery from moving, which may cause the edge corners of the electrode sheet to pierce the separator, when impacted by external forces.

### BRIEF DESCRIPTION OF THE DRAWINGS

FIG. 1 is a structural schematic view of an electrode sheet provided by one embodiment of the present application.
FIG. 2 is a first enlarged view at a position A shown in FIG. 1.
FIG. 3 is an enlarged view at a position B shown in FIG. 1.
FIG. 4 is an enlarged view at a position C shown in FIG. 1.
FIG. 5 is a second enlarged view at a position A shown in FIG. 1.
FIG. 6 is a third enlarged view at a position A shown in FIG. 1.

### Reference numerals:

1, electrode sheet; 10, electrode sheet body; 20, tab; 100, active material layer; 200, ceramic coating layer; 210, first ceramic coating layer; 220, second ceramic coating layer; 200A, spacing area; 201A, overlapping part; 101, first chamfer; 201, second chamfer; 301, third chamfer; 10A, first arc segment; 10B, first transition segment; 20A, second arc segment; 20B, second transition segment; 30A, third arc segment; 30B, third transition segment; 11, first side edge; 12, second side edge; 21, third side edge; 22, fourth side edge; 23, fifth side edge; 401, first transition part; 402, second transition part.

### DETAILED DESCRIPTION

In the present application, unless otherwise specified and defined, terms "connect", "contact" and "fix" should be understood in a broad sense. For example, it may be a fixed connection, a detachable connection, or made as a whole. It may be a mechanical connection or an electrical connection. It may be a direct or indirect connection through an intermediate media. It may be an internal connection between two components or an interaction relationship between two components. For those skilled in the art, meanings of the above terms in the present application can be understood according to situations.

In the present application, unless otherwise specified and defined, a first feature is disposed "on" or "under" a second feature may include a direct contact between the first feature and the second feature, or a contact between the first feature and the second feature through other features rather than the direct contact. Moreover, that the first feature is disposed "above" or "up" the second feature includes that the first feature is directly above or obliquely above the second feature, or only indicate that a horizontal height of the first feature is greater than a horizontal height of the second feature. That the first feature is disposed "below", "under", or "underneath" of the second feature includes that the first feature is directly below or obliquely below the second feature, or only indicates that the horizontal height of the first feature is less than the horizontal height of the second feature.

An electrode sheet, a battery cell, and a battery are provided by the embodiments of the present application. It should be noted that the description order of the following embodiments is not intended as a limitation of the preferred order of the embodiments.

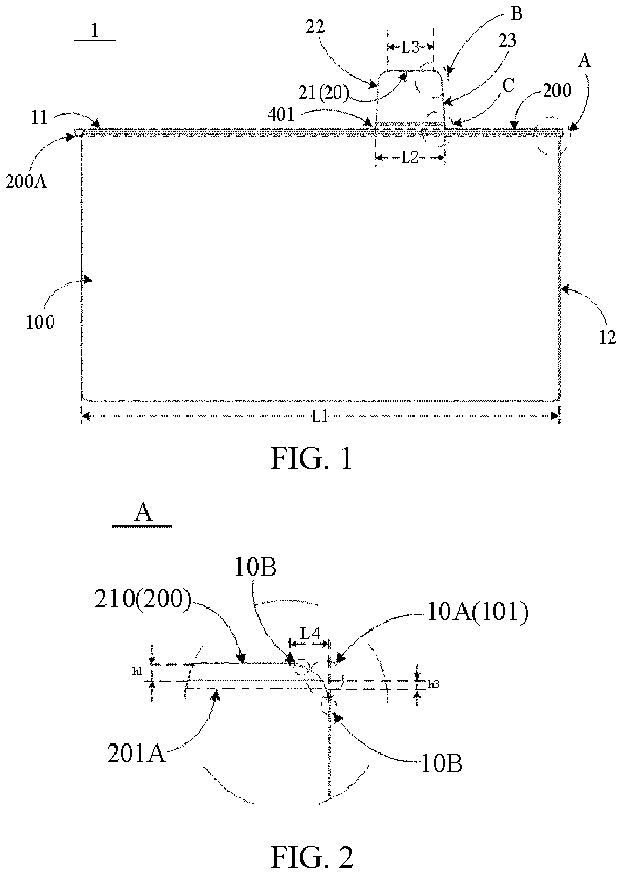

Referring to FIG. 1 to FIG. 6, an electrode sheet 1 is provided by the embodiments of the present application. The electrode sheet 1 includes an electrode sheet body 10. The electrode sheet body 10 includes a first side edge 11 and a second side edge 12 connected together. A connection position between the first side edge 11 and the second side edge 12 is provided with a first chamfer 101. The first chamfer 101 includes a first arc segment 10A and at least one first transition segment 10B. The first arc segment 10A is connected to the first side edge 11 and/or the second side edge 12 through the at least one first transition segment 10B. The first arc segment 10A protrudes toward a direction away from a center of the electrode sheet body 10.

It should be noted that in related art, before battery cells of lithium batteries are assembled by a sheet-stacking method, edge corners of electrode sheets are generally made into V-shaped angles to prevent the electrode sheets from shaking, which may cause the electrode sheets to pierce separators, when impacted by external forces. Although the method mentioned above reduces a risk of the electrode sheets piercing the separators in a certain extent, right angles of the electrode sheets have not been completely eliminated, but only been reduced or shifted positions. Therefore, the risk of the electrode sheets piercing the separators in the related art still exists.

It may be understood that in the embodiments of the present application, the first chamfer 101 includes the first arc segment 10A and the at least one first transition segment 10B. The first arc segment 10A is connected to the first side edge 11 and/or the second side edge 12 through the at least one first transition segment 10B. The first arc segment 10A protrudes toward the direction away from a center of the electrode sheet body 10. This avoids a situation in the related art that the edge corners of the electrode sheets are acute angles, obtuse angles, or right angles, and thus effectively prevents the batteries from moving, which may cause the edge corners of the electrode sheets to pierce the separators, when impacted by external forces.

Technical solutions of the present application are described in connection with specific embodiments.

Referring to FIG. 1 and FIG. 2, FIG. 1 is a structural schematic view of an electrode sheet provided by one embodiment of the present application. FIG. 2 is a first enlarged view at a position A shown in FIG. 1.

In one embodiment, the electrode sheet 1 includes the electrode sheet body 10. The electrode sheet body 10 includes the first side edge 11 and the second side edge 12 connected together. The connection position between the first side edge 11 and the second side edge 12 is provided with the first chamfer 101.

A material of the electrode sheet 1 includes, but is not limited to, aluminum foil. The first chamfer 101 includes the first arc segment 10A and the at least one first transition segment 10B. The first arc segment 10A is connected to the first side edge 11 and/or the second side edge 12 through the at least one first transition segment 10B. The electrode sheet body 10 has a shape of polygonal. Each edge corner of the electrode sheet body 10 is provided with the first chamfer 101. The first chamfer 101 includes the first arc segment 10A and two first transition segments 10B distributed at both ends of the first arc segment 10A. The first arc segment 10A is connected to the first side edge 11 through one of the two first transition segments 10B, and the first arc segment 10A is connected to the second side edge 12 through another one of the two first transition segments 10B. The first arc segment 10A protrudes toward the direction away from the center of the electrode sheet body 10. The first arc segment 10Ais disposed tangentially to the two first transition segments 10B.

In one embodiment, the electrode sheet body 10 has the shape of rectangular. Each of four edge corners of the electrode sheet body 10 is provided with the first chamfer 101. Specifically, the first arc segment 10A is an arc segment with a single curvature, and each of the two first transition segments 10B is a straight segment. A radius of curvature of the first arc segment 10A is greater than or equal to 0.1 mm and less than or equal to 30 mm. For example, the radius of curvature of the first arc segment 10A may be selected from any one of 5 mm, 10 mm, 15 mm, and 20 mm. It should be understood that in this embodiment, the radius of curvature of the first arc segment 10A is set to be one of 5 mm, 10 mm, 15 mm, and 20 mm, thereby alleviating the problem in the related art that the batteries may move, which may cause the edge corners of the electrode sheets to pierce the separators, when impacted by the external forces. Moreover, the first arc segment 10A mentioned above is formed by laser/ultrasonic cutting, which is conducive to processing and forming of the electrode sheet, and improves the production efficiency.

In this embodiment, it should be understood that the electrode sheet body 10 has the shape of rectangular, and each of the four edge corners of the electrode sheet body 10 is provided with the first chamfer 101. The first chamfer 101 includes the first arc segment 10A and the two first transition segments 10B distributed at both ends of the first arc segment 10A. The first arc segment 10A is connected to the first side edge 11 and the second side edge 12 through the two first transition segments 10B, thereby reducing problems that the edge corners are bent caused by collision of the electrode plate 1 during a sheet-stacking process, and dust is generated by material falling.

The first arc segment 10A is disposed tangentially to the two first transition segments 10B, so that the side edges of the electrode sheet body 10 are smoothly transitioned at the connection positions of the first chamfer 101, thereby effectively preventing the battery from moving , which may cause the edge corners of the electrode sheet 1 to pierce the separator, when impacted by the external forces. Moreover, a structure of the electrode sheet 1 of the present application is simple and a production difficulty is lower.

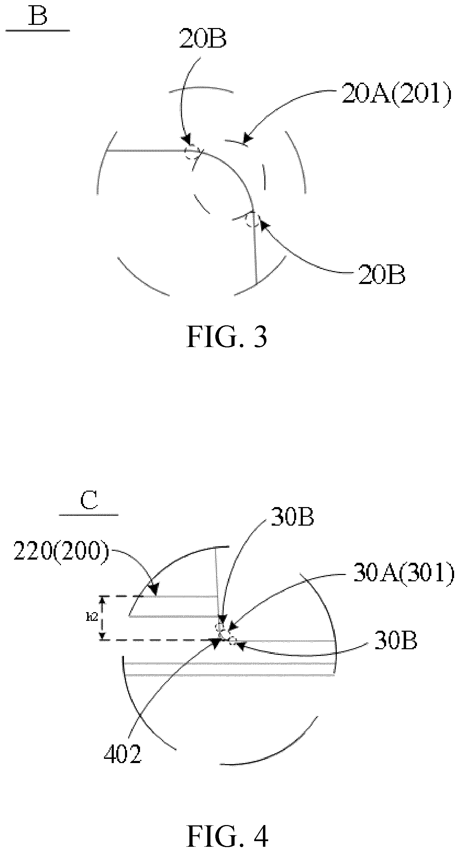

In one embodiment, referring to FIG. 1 and FIG. 3, FIG. 3 is an enlarged view at a position B shown in FIG. 1.

In this embodiment, the electrode sheet 1 further includes a tab 20 located at one side of the first side edge 11. The tab 20 extends toward a direction away from the electrode sheet body 10. The tab 20 and the electrode sheet body 10 are integrally formed by laser cutting, so as to simplify the structure of the electrode sheet 1 and reduce the cost of manufacturing the electrode sheet 1.

The tab 20 includes a third side edge 21, a fourth side edge 22, and a fifth side edge 23. The third side edge 21 is disposed away from the electrode sheet body 10. The fourth side edge 22 is disposed opposite to the fifth side edge 23. The fourth side edge 22 and the fifth side edge 23 are connected to two ends of the third side edge 21, respectively. Each of a connection position between the fourth side edge 22 and the third side edge 21 and a connection position between the fifth side edge 23 and the third side edge 21 is provided with a second chamfer 201, thereby avoiding problems such as damage, folding, and wrinkling of the tab 20 caused by the collision during the sheet-stacking process or production of the battery in the related art.

The second chamfer 201 includes a second arc segment 20A and at least one second transition segment 20B. At the connection position between the fourth side edge 22 and the third side edge 21, the second arc segment 20A is connected to the fourth side edge 22 and/or the third side edge 21 through the at least one second transition segment 20B. At the connection position between the fifth side edge 23 and the third side edge 21, the second arc segment 20A is connected to the fifth side edge 23 and/or the third side edge 21 through the at least one second transition segment 20B. The second arc segment 20A protrudes toward a direction away from a center of the tab 20, thereby reducing the stress concentration and reducing the risk of fracture, tearing, and damage to the tab 20.

The second chamfer 201 includes the second arc segment 20A and two second transition segments 20B distributed at both ends of the second arc segment 20A. At the connection position between the fourth side edge 22 and the third side edge 21, the second arc segment 20A is connected to the fourth side edge 22 through one of the two second transition segments 20B, and the second arc segment 20A is connected to the third side edge 21 through another one of the two second transition segments 20B. The second arc segment 20A protrudes toward the direction away from the center of the tab 20. The second arc segment 20A is disposed tangentially to the two second transition segments 20B, so that the side edges of the tab 20 are smoothly transitioned at the connection positions of the second chamfer 201, thereby effectively preventing the tab 20 from being damaged or bending when impacted by the external forces, and improving the stiffness of the tab 20. Moreover, the structure of the electrode sheet 1 of the present application is simple and the production difficulty is lower.

Specifically, in this embodiment, the second arc segment 20A is an arc segment with a single curvature, and each of the at least one second transition segment 20B is a straight segment. A radius of curvature of the second arc segment 20A is greater than or equal to 0.1 mm and less than or equal to 25 mm. For example, the radius of curvature of the second arc segment 20A may be selected from any one of 8 mm, 14 mm, and 20 mm, thereby better reducing the stress concentration, reducing a risk that the tab 20 is damaged or bent when impacted by the external forces, and improving the stiffness of the tab 20.

In this embodiment, in an extending direction of the first side edge 11, a ratio of a length L2 of the tab 20 to a length L1 of the electrode sheet body 10 ranges from 10% to 20%, a ratio of a length of an orthogonal projection of the first chamfer 101 on the first side edge 11 to the length L1 of the electrode sheet body 10 ranges from 1% to 25%, and/or, a length of an orthogonal projection of the second chamfer 201 on the third side edge 21 is 0.15 to 3 times a length L3 of the third side edge 21 of the tab 20.

In this embodiment, in the extending direction of the first side edge 11, the ratio of the length L2 of the tab 20 to the length L1 of the electrode sheet body 10 ranges from 14% to 15%, thereby increasing the overcurrent capacity at the tab 20 to meet the use of the battery under high current conditions, which is conducive to the heat dissipation of the battery, and improving the safety of the battery. The ratio of the length of the orthogonal projection of the first chamfer 101 on the first side edge 11 to the length L1 of the electrode sheet body 10 ranges from 1% to 2%, thereby better reducing the problems that the edge corners are bent caused by the collision of the electrode plate body 10 during the sheet-stacking process, and dust is generated by material falling. The length of the orthogonal projection of the second chamfer 201 on the third side edge 21 is 0.15 to 3 times the length L3 of the third side edge 21 of the tab 20, thereby better reducing the risk that the tab 20 is damaged or bent when impacted by the external forces, and improving the stiffness of the tab 20.

In one embodiment, referring to FIG. 1 and FIG. 4, FIG. 4 is an enlarged view at a position C shown in FIG. 1.

In this embodiment, both the fourth side edge 22 and the fifth side edge 23 extend toward a direction close to the electrode sheet body 10. Both the fourth side edge 22 and the fifth side edge 23 are connected to the first side edge 11 of the electrode sheet body 10. A connection position between the fourth side edge 22 and the first side edge 11 is provided with a first transition part 401. A connection position between the fifth side edge 23 and the first side edge 11 is provided with a second transition part 402. Each of the first transition part 401 and the second transition part 402 includes a third chamfer 301.

Specifically, the third chamfer 301 is a fillet. An angle of the third chamfer 301 is greater than 90 degrees and less than 180 degrees. In one embodiment, the angle of the third chamfer 301 is greater than 90 degrees and less than 100 degrees. The angle of the third chamfer 301 may be selected from one of 93 degrees, 94 degrees, 96 degrees, 98 degrees, and 100 degrees, thereby reducing the stress concentration and reducing the risk that the tab 20 is fractured.

The third chamfer 301 includes a third arc segment 30A and at least one third transition segment 30B. In the first transition part 401, the third arc segment 30A is connected to the fourth side edge 22 and/or the first side edge 11 through the at least one third transition segment 30B. In the second transition part 402, the third arc segment 30A is connected to the fifth side edge 23 and/or the first side edge 11 through the at least one third transition segment 30B. The third arc segment 30A protrudes toward a direction close to the center of the electrode sheet body 10. In this embodiment, the third chamfer 301 includes the third arc segment 30A and two third transition segments 30B distributed at both ends of the third arc segment 30A. In the first transition part 401, the third arc segment 30A is connected to the fourth side edge 22 through one of the two third transition segments 30B, and the third arc segment 30A is connected to the first side edge 11 through another one of the two third transition segments 30B. In the second transition part 402, the third arc segment 30A is connected to the fifth side edge 23 through one of the two third transition segments 30B, and the third arc segment 30A is connected to the first side edge 11 through another one of the two third transition segments 30B. The third arc segment 30A protrudes toward the direction close to the center of the electrode sheet body 10. The third arc segment 30A is disposed tangentially to the two third transition segments 30B.

In this embodiment, the third arc segment 30A is an arc segment with a single curvature, and each of the two third transition segments 30B is a straight segment. A radius of curvature of the third arc segment 30A is greater than or equal to 0.1 mm and less than or equal to 25 mm. It should be understood that in this embodiment, the connection position between the fourth side edge 22 and the first side edge 11 is provided with the first transition part 401, and the connection position between the fifth side edge 23 and the first side edge 11 is provided with the second transition part 402. Each of the first transition part 401 and the second transition part 402 includes the third chamfer 301. The third chamfer 301 includes the third arc segment 30A and the two third transition segments 30B distributed at both ends of the third arc segment 30A. The third arc segment 30A is the arc segment with the single curvature, and the two third transition segments 30B are straight segments. The arc segment structure can disperse the stress at the connection position between the tab 20 and the electrode sheet body 10, thereby optimizing a stress situation of the tab 20, and reducing the risk that the tab 20 is fractured.

In this embodiment, the third arc segment 30A is disposed tangentially to the two third transition segments 30B. The connection position between the side edges of the electrode sheet body 10 and the third chamfer 301, and the connection position between the side edges of the tab 20 and the third chamfer 301 are smoothly transitioned, thereby effectively preventing the battery from moving, which may cause the risk of fracture at the connection positions between the tab 20 and the electrode sheet body 10, when impacted by the external forces.

The radius of curvature of the third arc segment 30A may be selected from any one of 8 mm, 14 mm, and 20 mm, thereby better reducing the stress concentration at the connection positions between the tab 20 and the electrode sheet body 10, and reducing the risk of fracture of the tab 20.

It should be noted that in the related art, limited by existing molds, the edge corners of the electrode sheet are generally made into V-angles. In the embodiments of the present application, the arc segment of the first chamfer 101, the arc segment of the second chamfer 201, and the arc segment of the third chamfer 301 can be formed by laser cutting, so that production of the electrode sheet 1 is not limited by the existing molds, the feasibility is higher, the cost is lower, and the production is convenient.

In this embodiment, the first arc segment 10A, the second arc segment 20A, and the third arc segment 30A are all circular arc segments with a single curvature. The first arc segment 10A, the second arc segment 20A, and the third arc segment 30A are all straight segments for example only. This embodiment does not specifically limit shapes of the first arc segment 10A, the second arc segment 20A, the third arc segment 30A, the first transition segment 10B, the second transition segment 20B, and the third transition segment 30B.

In one embodiment, an active material layer 100 is provided on the electrode sheet body 10. A spacing area 200A is provided between a periphery of the active material layer 100 and the first side edge 11. The spacing area 200A is coated with a ceramic coating layer 200. The ceramic coating layer 200 at least covers part of the first chamfer 101. A material of the ceramic coating layer 200 includes boehmite.

It should be understood that a periphery of the electrode sheet body 10 is prone to burrs when cutting during the production process of the battery. When there are burrs on the electrode body 10, the exposed burrs may pierce the separator between a positive electrode sheet and a negative electrode sheet of the battery, resulting in direct contact between the positive electrode sheet and the negative electrode sheet of the battery and causing internal short circuits in the battery. In this embodiment, the spacing area 200A is provided between the periphery of the active material layer 100 and the first side edge 11, and the spacing area 200A is coated with the ceramic coating layer 200, so that a surface of the electrode sheet body 10 after being cut is smooth and burr-free, thereby avoiding the technical problem in the related art that there are burrs on the positive electrode sheet and the negative electrode sheet of the battery, which affects the safety performance of the battery. The ceramic coating layer 200 may be coated before the periphery of the electrode sheet body 10 is cut, or the ceramic coating layer 200 may be coated after the periphery of the electrode sheet body 10 is cut, the sequence of which being not specifically limited in this embodiment.

In one embodiment, referring to FIG. 1, FIG. 2, and FIG. 4, the ceramic coating layer 200 includes a first ceramic coating layer 210 and a second ceramic coating layer 220 connected. The first ceramic coating layer 210 is coated on the spacing area 200A. The second ceramic coating layer 220 is coated on a root surface of the tab 20 adjacent to the electrode sheet body 10. It should be understood that in this embodiment, by providing the second ceramic coating layer 220 to be coated on the root surface of the tab 20 adjacent to the electrode sheet body 10, the surface of the tab 20 after being cut close to the electrode sheet body 10 is smooth and burr-free, thereby avoiding the technical problem in the related art that there are burrs on the tab 20, which affects the safety performance of the battery. Moreover, a strength of the electrode sheet can be improved, and the risk of bending and tearing of the root of the tab 20 can be reduced.

Specifically, in a direction from the active material layer 100 to the ceramic coating layer 200, a width h1 of the first ceramic coating layer 210 is greater than or equal to 1 mm and less than or equal to 3 mm. A width h2 of the second ceramic coating layer 220 is greater than or equal to 4 mm and less than or equal to 6 mm. In one embodiment, the width h1 of the first ceramic coating layer may be selected from any one of 1 mm, 2 mm, and 3 mm, and the width h2 of the second ceramic coating layer 220 may be selected from any one of 4 mm, 5 mm, and 6 mm, so that the ceramic coating layer 200 with a certain width is coated in the spacing area 200A and the root surface of the tab 20 close to the electrode sheet body 10, and the surface of electrode sheet body 10 after being cut and the surface of the side close the electrode sheet body 10 are smooth and burr-free, thereby avoiding the technical problem in the related art that there are burrs on the tab 20, which affects the safety performance of the battery.

In one embodiment, the first ceramic coating layer 210 abuts the periphery of the active material layer 100. In another embodiment, an overlapping part 201A is provided between the first ceramic coating layer 210 and the active material layer 100.

When the overlapping part 201A is provided between the first ceramic coating layer 210 and the active material layer 100, in the direction from the active material layer 100 to the ceramic coating layer 200, a width of the overlapping part 201A is greater than 0 mm and less than or equal to 1 mm. For example, the width of the overlapping part 201A is 1 mm. When the electrode sheet 1 is a positive electrode sheet, by disposing the overlapping part 201A, the first ceramic coating layer 210 can cover an area where the periphery of the active material layer 100 is thinner, thereby reducing the width of the active material layer 100 of the positive electrode sheet and preventing the occurrence of lithium precipitation. Furthermore, there is no gap between the ceramic coating layer 200 and the active material layer 100, so as to ensure that the ceramic coating layer 200 covers at least part of the first chamfer 101, and that the surface of electrode sheet body 10 after being cut is smooth and burr-free, thereby avoiding the technical problem in the related art that there are burrs on the electrode sheet body 10, which affects the safety performance of the battery.

In another embodiment, the first ceramic coating layer 210 abuts the periphery of the active material layer 100 to reduce a total amount of lithium-ion detachment at the periphery of the positive electrode sheet, thereby reducing a risk of lithium detachment during high-rate charging and discharging of the lithium battery, improving the safety performance of the lithium battery, and improving the capacity retention rate of the lithium-ion battery at a later stage of cycling.

In another embodiment, a thickness of the periphery of the active material layer 100 gradually decreases toward the first ceramic coating layer 210, so as not to affect an overall thickness of the electrode sheet 1. The thickness of a periphery of the second ceramic coating layer 220 gradually decreases away from the first ceramic coating layer 210, so as to ensure the thickness of the tab 20, and to reduce the risk that burrs on the tab 20 pierce the separator, which may affect the safety performance of the battery.

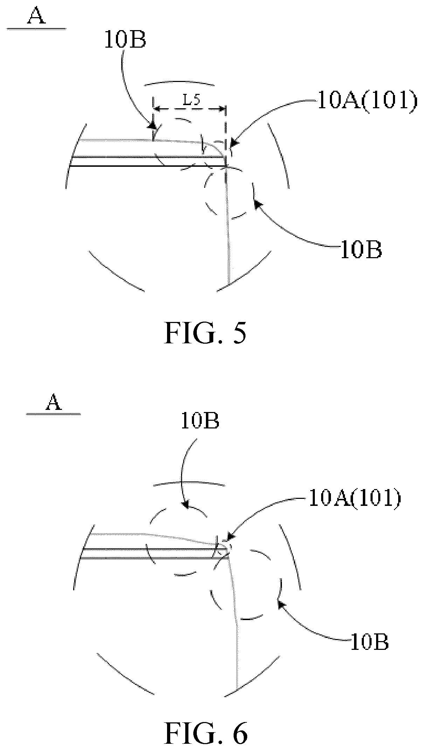

Referring to FIG. 1 and FIG. 5, FIG. 5 is a second enlarged view at a position A shown in FIG. 1.

In this embodiment, the structure of the electrode sheet 1 is similar/identical to the structure of the electrode sheet provided by the above-mentioned embodiment. For details, please refer to the description related to the electrode sheet in the above-mentioned embodiment, which will not be repeated here. The difference between the two embodiments is illustrated below.

In this embodiment, each of the first transition segment 10B, the second transition segment 20B, and the third transition segment 30B is a straight-line segment.

In this embodiment, the first chamfer 101 is a curved segment composed of a plurality of end-to-end connected circular arc segments. Both the first arc segment 10A and the first transition segment 10B are circular arc segments with a single curvature. A radius of curvature of the first transition segment 10B is greater than a radius of curvature of the first arc segment 10A.

It should be noted that in this embodiment, the first chamfer 101 is the curved segment composed of the plurality of end-to-end connected circular arc segments, and both the first arc segment 10A and the first transition segment 10B are circular arc segments with the single curvature, thereby effectively avoiding a risk of flipping along two tangent points between the single outer arc structure and the periphery of the electrode sheet 1, when the periphery of the electrode sheet 1 is a single outer arc structure.

In this embodiment, the second chamfer 201 is a curved segment composed of a plurality of end-to-end connected circular arc segments. Both the second arc segment 20A and the second transition segment 20B are circular arc segments with a single curvature. A radius of curvature of the second transition segment 20B is greater than the radius of curvature of the second arc segment 20A. The third chamfer 301 is a curved segment composed of a plurality of end-to-end connected circular arc segments. Both the third arc segment 30A and the third transition segment 30B are circular arc segments with a single curvature. A radius of curvature of the third transition segment 30B is greater than the radius of curvature of the third arc segment 30A. The beneficial effects of the third transition segment are similar/identical to that of the first chamfered 101 that is a curved segment composed of the plurality of end-to-end connected arc segments.

Referring to FIG. 1 and FIG. 6, FIG. 6 is a third enlarged view at a position A shown in FIG. 1.

In this embodiment, the structure of the electrode sheet 1 is similar/identical to the structure of the electrode sheet provided by the above-mentioned embodiment. For details, please refer to the description related to the electrode sheet in the above-mentioned embodiment, and will not be repeated here. The difference between the two embodiments is illustrated below.

In this embodiment, each of the first transition segment 10B, the second transition segment 20B, and the third transition segment 30B is a spline curve, and the spline curve includes a plurality of curvature arc segments sequentially connected.

In this embodiment, the first arc segment 10A is a circular arc segment with a single curvature, and the first transition segment 10B is a spline curve composed of the plurality of curvature arc segments sequentially connected. It should be understood that in this embodiment, the first chamfer 101 includes a spline curve, an arc segment, and a spline curve end-to-end connected, so that during the production or use of the battery, when the battery moves when impacted by the external forces, the first chamfer 101 with the arc segment can prevent the electrode sheet 1 from piercing the separator, thereby avoiding the situation in the related art that the edge corners of the electrode sheet 1 are acute angles, obtuse angles, or right angles, and thus effectively prevents the battery from moving, which causes the edge corners of the electrode sheet 1 pierce the separator, when impacted by the external forces.

In this embodiment, the second arc segment 20A is a circular arc segment with a single curvature, and the second transition segment 20B is a spline curve composed of the plurality of curvature arc segments sequentially connected. The third arc segment 30A is a circular arc segment with a single curvature, and the third transition segment 30B is a spline curve composed of the plurality of curvature arc segments sequentially connected. The beneficial effects are similar/identical to that of the first chamfered 101 including a spline curve, an arc segment, and a spline curve end-to-end connected, which will not be described in detail in this embodiment.

The embodiment of the present application further provides a battery cell including a positive electrode sheet, a negative electrode sheet, and a positive electrode sheet disposed between the negative electrode sheet and the separator.

The positive electrode sheet includes a positive electrode sheet body and a positive electrode tab. The positive electrode sheet body has a shape of rectangular. Each of four edge corners of the positive electrode sheet body are provided with the first chamfer according to any one of the embodiments mentioned above. The positive electrode tab includes the second chamfer according to any one of the embodiments mentioned above. A connection position between the positive electrode sheet body and the positive electrode tab is provided with the third chamfer according to any one of the embodiments mentioned above. The positive electrode tab includes a negative electrode sheet body and a negative electrode tab. The negative electrode sheet body has a shape of rectangular. Each of four edge corners of the negative electrode sheet body are provided with the first chamfer 101 according to any one of the embodiments mentioned above. The negative electrode tab includes the second chamfer according to any one of the embodiments mentioned above. A connection position between the negative electrode sheet body and the negative electrode tab is provided with the third chamfer according to any one of the embodiments mentioned above.

An active material layer is provided on the positive electrode sheet body. A spacing area is provided between a periphery of the active material layer and a first side edge of the positive electrode sheet body. The spacing area is coated with a ceramic coating layer. The ceramic coating layer at least covers part of the first chamfer of the positive electrode sheet body. An orthographic projection of the negative electrode sheet on the separator covers an orthographic projection of the ceramic coating layer on the separator, so that a surface of the positive electrode sheet body after being cut is smooth and burr-free, thereby avoiding the technical problem in the related art that there are burrs on the positive electrode sheet body and the negative electrode sheet body, which affects the safety performance of the battery.

It should be noted that the first chamfer 101, the second chamfer 201, the third chamfer 301, and the ceramic coating layer 200 have been described in detail in the above-described embodiments, and will not be described again herein.

The embodiments further provide a battery module includes a housing and a battery cell according to any one of the embodiments mentioned above. The housing is provided with an accommodating cavity. The battery cell is located within the accommodating cavity. The housing is a soft-packed polymer type housing or a square housing. The battery cell includes a battery cell of the lithium battery. The battery module is used as a power supply for an electrical device. The electrical device may be an automobile, an aircraft, a mechanical production device, etc..

## Claims

1. An electrode sheet (1), **characterized in that** the electrode sheet (1) comprises an electrode sheet body (10), the electrode sheet body (10) comprises a first side edge (11) and a second side edge (12) connected together, and a connection position between the first side edge (11) and the second side edge (12) is provided with a first chamfer (101);
wherein the first chamfer (101) comprises a first arc segment (10A) and at least one first transition segment (10B), the first arc segment (10A) is connected to the first side edge (11) and/or the second side edge (12) through the at least one first transition segment (10B), and the first arc segment (10A) protrudes toward a direction away from a center of the electrode sheet body (10).

2. The electrode sheet (1) according to claim 1, **characterized in that** the electrode sheet body (10) has a shape of polygonal, and each edge corner of the electrode sheet body (10) is provided with the first chamfer (101).

3. The electrode sheet (1) according to claim 1, **characterized in that** the electrode sheet (1) further comprises a tab (20) located at one side of the first side edge (11) and extending in a direction away from the electrode sheet body (10), wherein the tab (20) and the electrode sheet body (10) are integrally formed.

4. The electrode sheet (1) according to claim 3, **characterized in that** the tab (20) comprises a third side edge (21), a fourth side edge (22), and a fifth side edge (23), the third side edge (21) is disposed away from the electrode sheet body (10), and the fourth side edge (22) is disposed opposite to the fifth side edge (23);
the fourth side edge (22) and the fifth side edge (23) are connected to two ends of the third side edge (21), respectively, and each of a connection position between the fourth side edge (22) and the third side edge (21) and a connection position between the fifth side edge (23) and the third side edge (21) is provided with a second chamfer (201).

5. The electrode sheet (1) according to claim 4, **characterized in that** the second chamfer (201) comprises a second arc segment (20A) and at least one second transition segment (20B);
at the connection position between the fourth side edge (22) and the third side edge (21), the second arc segment (20A) is connected to the fourth side edge (22) and/or the third side edge (21) through the at least one second transition segment (20B); and
at the connection position between the fifth side edge (23) and the third side edge (21), the second arc segment (20A) is connected to the fifth side edge (23) and/or the third side edge (21) through the at least one second transition segment (20B);
wherein the second arc segment (20A) protrudes toward a direction away from a center of the tab (20).

6. The electrode sheet (1) according to claim 5, **characterized in that** both the fourth side edge (22) and the fifth side edge (23) extend in a direction close to the electrode sheet body (10), and both the fourth side edge (22) and the fifth side edge (23) are connected to the first side edge (11) of the electrode sheet body (10);
a connection position between the fourth side edge (22) and the first side edge (11) is provided with a first transition part (401), a connection position between the fifth side edge (23) and the first side edge (11) is provided with a second transition part (402), and each of the first transition part (401) and the second transition part (402) comprises a third chamfer (301).

7. The electrode sheet according to claim 6, **characterized in that** the third chamfer is a fillet, and an angle of the third chamfer is greater than 90 degrees and less than 180 degrees; or
the angle of the third chamfer is greater than 90 degrees and less than 100 degrees.

8. The electrode sheet (1) according to claim 6, **characterized in that** the third chamfer (301) comprises a third arc segment (30A) and at least one third transition segment (30B);
in the first transition part (401), the third arc segment (30A) is connected to the fourth side edge (22) and/or the first side edge (11) through the at least one third transition segment (30B), and the third arc segment (30A) protrudes toward a direction close to the center of the electrode sheet body (10); in the second transition part (402), the third arc segment (30A) is connected to the fifth side edge (23) and/or the first side edge (11) through the at least one third transition segment (30B), and the third arc segment (30A) protrudes toward the direction close to the center of the electrode sheet body (10).

9. The electrode sheet according to claim 8, **characterized in that** each of the first arc segment, the second arc segment, and the third arc segment is a circular arc segment with a single curvature;
a radius of curvature of the first arc segment is greater than or equal to 0.1 mm and less than or equal to 30 mm;
a radius of curvature of the second arc segment is greater than or equal to 0.1 mm and less than or equal to 25 mm; and/or
a radius of curvature of the third arc segment is greater than or equal to 0.1 mm and less than or equal to 25 mm.

10. The electrode sheet (1) according to claim 8, **characterized in that** each of the first transition segment (10B), the second transition segment (20B), and the third transition segment (30B) is a straight-line segment;
each of the first transition segment (10B), the second transition segment (20B), and the third transition segment (30B) is a circular arc segment with a single curvature; or
each of the first transition segment (10B), the second transition segment (20B), and the third transition segment (30B) is a spline curve, and the spline curve comprises a plurality of curvature arc segments sequentially connected together.

11. The electrode sheet (1) according to claim 4, **characterized in that** in an extending direction of the first side edge (11), a ratio of a length of the tab (20) to a length of the electrode sheet body (10) ranges from 10% to 20%;
a ratio of a length of an orthogonal projection of the first chamfer (101) on the first side edge (11) to the length of the electrode sheet body (10) ranges from 1% to 25%; and/or
a length of an orthogonal projection of the second chamfer (201) on the third side edge (21) is 0.15 to 3 times a length of the third side edge (21) of the tab (20).

12. The electrode sheet (1) according to any one of claims 3-11, **characterized in that** an active material layer (100) is provided on the electrode sheet body (10), a spacing area is provided between a periphery of the active material layer (100) and the first side edge (11), and the spacing area is coated with a ceramic coating layer (200) at least covering part of the first chamfer (101);
optionally, a material of the ceramic coating layer comprises boehmite.

13. The electrode sheet (1) according to claim 12, **characterized in that** the ceramic coating layer (200) comprises a first ceramic coating layer (210) and a second ceramic coating layer connected together, the first ceramic coating layer (210) is coated on the spacing area, and the second ceramic coating layer (220) is coated on a root surface of the tab (20) adjacent to the electrode sheet body (10);
optionally, in a direction from the active material layer to the ceramic coating layer, a width of the first ceramic coating layer is greater than or equal to 1 mm and less than or equal to 3 mm, and a width of the second ceramic coating layer is greater than or equal to 4 mm and less than or equal to 6 mm.

14. The electrode sheet (1) according to claim 13, **characterized in that** the first ceramic coating layer (210) abuts the periphery of the active material layer (100); or
an overlapping part (201A) is provided between the first ceramic coating layer (210) and the active material layer (100);
optionally, in a direction from the active material layer (100) to the ceramic coating layer (200), a width of the overlapping part (201A) is greater than 0 mm and less than or equal to 1 mm.

15. The electrode sheet (1) according to claim 14, **characterized in that** a thickness of a periphery of the active material layer (100) gradually decreases toward the first ceramic coating layer (210) gradually decreases; and/or
a thickness of a periphery of the second ceramic coating layer (220) gradually decreases away from the first ceramic coating layer (210).

16. A battery cell, **characterized in that** the battery cell comprises a positive electrode sheet, a negative electrode sheet, and a separator between the positive electrode sheet and the negative electrode sheet; wherein the positive electrode sheet comprises the electrode sheet (1) according to any one of claims 1 to 15, and the negative electrode sheet comprises the electrode sheet (1) according to any one of claims 1 to 11;
optionally, an orthographic projection of the negative electrode sheet on the separator covers an orthographic projection of the ceramic coating layer (200) on the separator.

17. A battery, **characterized in that** the battery comprises a housing and the battery cell according to claim 16, wherein the housing is provided with an accommodating cavity, and the battery cell is located within the accommodating cavity.
